# EUROPEAN PATENT APPLICATION

(11) **EP 2 843 889 A1**
(43) Date of publication of application: **04.03.2015**
(21) Application number: 13306182.0
(22) Date of filing: 29.08.2013
(51) Int. Cl.: H04L 12/733, H04L 12/725, H04L 12/707, H04W 8/08, H04W 36/22, H04W 76/04

(54) **System and method for routing traffic in a mobile network interfaced with a cdn**

(71) Applicant: ALCATEL LUCENT, 92100 Boulogne-Billancourt (FR)
(72) Inventor: El Mghazli, Yacine, 91620 Nozay (FR); Mongazon-Cazavet, Bruno, 91620 Nozay (FR)
(74) Representative: 2SPL Patentanwälte PartG mbB

(57) **Abstract**

A device for routing data in a mobile network, this device being interfaced between at least one delivery appliance of a content delivery network, a serving gateway and a base station, the serving gateway being connected to a packet data network gateway, said device being configured for
- receiving at least one uplink data from the base station;
- determining IP destination address for each received uplink data;
- routing the received uplink data
o towards the delivery appliance when the uplink data IP destination address matches an IP address known from the module;
o towards the serving gateway otherwise.

## Description

### FIELD OF THE INVENTION

The present invention relates to the technical field of Content Delivery Network (CDN), and particularly to a method and a system to route transparently the CDN traffic in a mobile network.

### BACKGROUND OF THE INVENTION

By "user equipment", it is meant, here, any device comprising means permitting to connect to a mobile network such as a cellular network.

A Content Delivery Network, also referred to as Content Distribution Network (CDN), is a system making available copies of data/content, through interconnected storage means such as caches.

Data/content stored in a CDN network, may be for instance web objects, downloadable objects (ex: media files, software, documents), applications or real-time media streams. The data traffic associated with this kind of content is further referred to herein after as "CDN traffic".

In CDN, copies of data/content are placed at various points of the network so as to maximize bandwidth/throughputs for access to the data/content from clients throughout the network.

Unlike clients of a network accessing a same central server, CDN permits to avoid bottlenecks near a central server. Indeed, in CDN a client accesses a copy of a data/content located nearby.

For CDN, the term "near" refers to a topological distance in IP network. A topological distance may be evaluated, based on criterions such as hop counts, network latency, response to a ping (i.e. round-trip delay time) or network load.

In fact, the CDN role is to take into account the notion of IP distance and to select an appropriate delivery node (also known as Delivery Appliance DA) where to route a user request. By "Delivery Appliance", it is meant here, a point/node in CDN, comprising means to store CDN data/content copies and means for delivering them.

CDN model is very efficient for fixed network, provided for instance by Internet Service Providers (ISP), because user IP addresses are allocated in a geographical manner. With means that are based on the IP address of a user, it is possible to identify a nearest DA (in term of network topological distance) from the user location.

However, for Mobile Network Operators (MNO), the problem in cellular networks is different since IP addresses are allocated from a pool of IP addresses, without any user location considerations. In fact, it is impossible to establish a link between user IP address and user location for identifying a nearest DA, i.e. to forward user CDN content request to the closest delivery node.

Mobile networks, such as LTE packet core (EPC for Evolved Packet Core), are generally designed in a centralized way, so that all traffic is tunneled through a single Packet Data Network Gateway (PGW) interfaced with a Packet Data Networks (PDN) through SGi link.

The PDN may be provided for instance by a CDN, comprising DAs (also known as delivery nodes) and service nodes (also known as control nodes), that are configured for managing, routing and monitoring components of the CDN.

In fact, LTE packet core is a centralized architecture because UE are one hop away from the PGW. The LTE architecture does not allow CDN service to determine a near DA based only on UE IP address, since UE IP address has no meaning (i.e. are not interpretable in terms of location) within LTE networks. Moreover, LTE architecture does not allow placing DAs lower in LTE networks than on SGi interfaces, i.e. next to PGWs because of its centralized architecture.

This appears to be a major issue, since mobile networks face the same traffic problems as fixed/wired accesses networks, and it would be definitely useful to place DAs lower in LTE networks, in order to offload the EPC.

Consequently, one problem to solve is to allow CDN operators to place DAs at lower levels in their networks, in order to avoid central server bottlenecks issues, and make DAs reachable by the users.

One most known solution is based on having a dedicated local PGW near a LTE cell, allowing the UEs to access the closest DA behind such a local PGW. Nevertheless, such solution constrains the UE to deal with several LTE interfaces and to manage the CDN signaling which might be complex.

Another solution relies on introducing a function in the Serving Gateways (SGW), capable of:
- transparently looking the UE uplink data traffic and reroute appropriate traffic to a near DA;
- transparently rerouting downlink data traffic from the near DA towards the UE.

Nevertheless, this solution requires modifying all SGWs in the network, with this function. If it is not the case, for instance if a MNO has several SGWs from different vendors, the LTE network must be able to select a modified SGW to serve a UE, at least for the Internet APN (Access Point Name). This means modifying the SGW selection process in the network. Moreover, there are some cases where this process can not be theoretically implemented. For instance, if a UE has already established a session with another APN such as IMS (IP Multimedia Subsystem) voice service, this forces the UE to be served by the same SGW for subsequent sessions establishments.

Moreover, MNOs usually collocate SGWs near PGWs during EPC deployment. In this situation, there is no other choice for interconnecting DAs than PGW that is the central site location, inducing same bottlenecks issues.

One object of the present invention is to provide a solution to the aforementioned problems, and offers other advantages over the prior art.

Another object of the present invention is to propose a solution to deploy DA of CDNs at a lower level in mobile networks.

Another object of the present invention is to route transparently CDN content requests from a UE connected to a mobile network, to a nearest DA.

Another object of the present invention is to deliver CDN content from a nearest DA to a UE connected to a mobile network.

Another object of the present invention is to alleviate the loading of the mobile network core networks, in order to limit bottlenecks issues.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Various embodiments relate to a device for routing data in a mobile network, this device being interfaced between at least one delivery appliance of a content delivery network, a serving gateway and a base station, the serving gateway being connected to a packet data network gateway, said device being configured for
- receiving at least one uplink data from the base station;
- determining IP destination address for each received uplink data;
- routing the received uplink data
   ○ towards the delivery appliance when the uplink data IP destination address matches an IP address known from the module;
   ○ towards the serving gateway otherwise.

In accordance with a broad aspect, the device is further configured for
- receiving in response to the uplink data at least one downlink data from the serving gateway or at least one downlink data from the delivery appliance;
- determining IP destination address for each received downlink data;
- routing each received downlink data towards the base station.

In accordance with a broad aspect, the device is further configured to determine information comprising DSCP field and tunnel endpoint identifier from
- the received uplink data routed towards the serving gateway;
- the received downlink data from the serving gateway.

In accordance with a broad aspect, the device is further configured for identifying a mapping between each tunnel endpoint identifier and each couple IP destination address and DSCP field determined from
- the received uplink data routed towards the serving gateway;
- the received downlink data from the serving gateway.

In accordance with a broad aspect, the device is further configured for
- identifying a tunnel endpoint identifier for the received downlink data from the delivery appliance;
- routing the received downlink data from the delivery appliance based on the identified tunnel endpoint identifier.

Further, various embodiments relate to a method for routing data in a mobile network, the method comprising the following steps
- a reception step of at least one uplink data through an interface towards a base station;
- a determination step of IP destination address for each received uplink data;
- a routing step of the received uplink data through an interface
   ○ towards a delivery appliance of a content delivery network, when the uplink data IP destination address matches a known IP address;
   ○ towards a serving gateway connected to a packet data network gateway otherwise.

In accordance with a broad aspect, the method further comprises
- a reception step in response to the uplink data of at least one downlink data through the interface towards the serving gateway or at least one downlink data through the interface towards the delivery appliance;
- a determination step of IP destination address for each received downlink data;
- a routing step of each received downlink data through the interface towards the base station.

In accordance with a broad aspect, the method further comprises a determination step of information comprising DSCP field and tunnel endpoint identifier from
- the received uplink data routed towards the serving gateway;
- the received downlink data from the serving gateway.

In accordance with a broad aspect, the method further comprises an identification step of a mapping between each tunnel endpoint identifier and each couple IP destination address and DSCP field determined from
- the received uplink data routed towards the serving gateway;
- the received downlink from the serving gateway.

In accordance with a broad aspect, the method further comprises
- an identification step of a tunnel endpoint identifier for the received downlink data from the delivery appliance;
- a routing step of the received downlink data from the delivery appliance based on the identified tunnel endpoint identifier.

Various embodiments further relate to computer program products for performing the above method.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

The objects, advantages and other features of various embodiments will become more apparent from the following disclosure and claims. The following non-restrictive description of preferred embodiments is given for the purpose of exemplification only with reference to the accompanying drawing in which
- Figure 1 is a schematic diagram illustrating the routing of data traffic according to various embodiments;
- Figure 2 is listing some bearer information that may be learnt from non-CDN traffic according to various embodiments.

### DETAILED DESCRIPTION OF ILLUSTRATIVE EMBODIMENTS

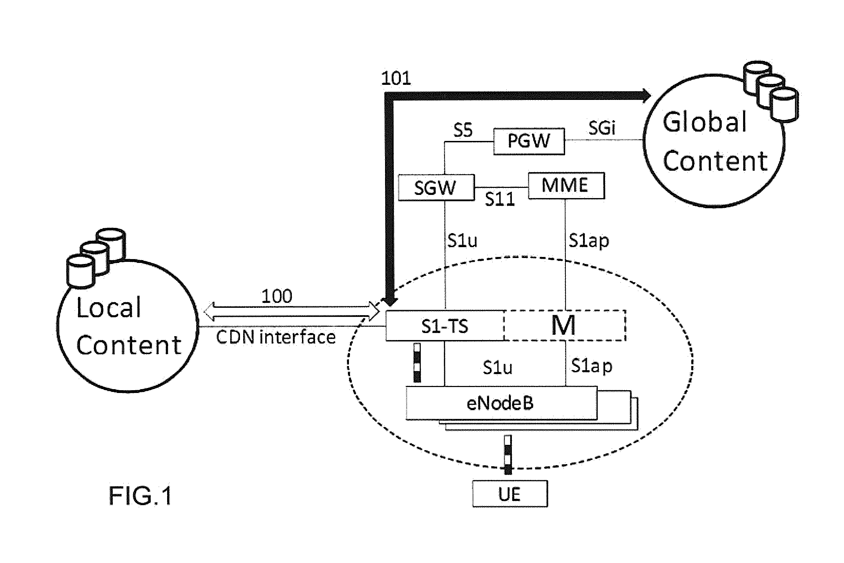

Figure 1 represents a simplified example of a LTE network comprising
- a PGW coupled with a SGW through S5 interface, and coupled through SGi interface to a PDN providing a global content;
- a Mobility Management Entity (MME) coupled with the SGW through S11 interface and comprising a S1ap links towards an eNodeB;
- an eNodeB providing a connection to a UE and comprising a S1u link towards the SGW.

In one embodiment, the LTE S1u link is "split" and a new function is implemented between the SGW and the eNodeB level. This function is performed with a S1 transparent switching module implemented on S1u interface, further referred as S1-TS module.

This module is interfaced with at least one local CDN DA providing a local content, through a CDN interface. One function of the S1-TS module is to observe the data traffic, and route automatically and transparently (from eNodeB and SGW point of views) CDN traffic (i.e. packets referring to CDN content) from/to a nearest local DA from the eNodeB point of view. This permits notably to avoid the loading of the LTE core network.

In a preferred embodiment, the S1-TS module is capable to learn the traffic characteristics (i.e. packets parameters) from the S1u interface, in order to differentiate CDN traffic, from the rest of the traffic in the network. The rest of the traffic (non-CDN) may for instance comprise VOIP packets referring to an IMS voice service.

A CDN service/control node, not represented on figure 1, may be interfaced through SGi interface with the PGW connected to the SGW, this node being configured for managing, routing and monitoring components of the CDN. In the prior art, when a UE in a mobile network requests a CDN content, the CDN service node detects the request is coming from a mobile and which MNO it belongs to. But since the IP address of the UE does not indicate its location in its mobile network, a near DA according to the topology of the mobile network can not be retrieved. For this reason, in the prior art, the service node always redirects the UE requests, using Domain Name System (DNS) towards a common and unique first IP address, referring to a generic DA providing a global content. This first IP address is unique per CDN and known by the SGW, in order to route user requests to the generic DA.

In the preferred embodiment, this first address is supposed to be known from the S1-TS module too. This address may be, for instance, stored in a preconfigured list of generic DAs. With implementing S1-TS module on S1u interface, the S1-TS module is able to detect UL packets towards a generic DA (i.e. UE request for CDN content), based on the IP address destination of the packets.

In this case, S1-TS module routes the CDN content request to a nearest local DA instead of the generic DA. Indeed, the mapping between the generic DA common IP and the nearest DA IP is performed at S1-TS module level.

To do so, the S1-TS module may eventually replace the first IP address destination of the generic DA by a second IP address of the nearest local DA, for instance by means of NAT (Network Address Translation). However, the replacement of the first IP address is not mandatory. For instance, in a private mobile network, the same IP address could be allocated to a near DA, which would not require IP address replacement.

Moreover, the S1-TS module is also responsible for managing the reverse redirection for downlink CDN traffic (i.e. for DL CDN packets), from the nearest local DA to the UE.

The UL or DL non-CDN traffic is just forwarded by the S1-TS module, respectively towards the global content or the UE, as already known from the prior art.

On Figure 1, a CDN traffic from/to a UE connected to an eNodeB, is represented as uncolored and other data traffic in black, with respective traffic data paths symbolized by arrows **100** and **101.** As it can be seen CDN traffic is switched, i.e. rerouted at S1u interface level by the S1-TS module, through CDN interface to/from a nearest local DA comprising CDN local content (arrow **100).** By "rerouting" traffic, it is meant here, routing traffic to a new/different destination instead of an initial expected/specified destination.

The rest of the traffic is still forwarded/routed through the S1-TS module, over current LTE interfaces to/from a global content provided by a PDN, interfaced with the PGW (arrow **101**).

A UE session with a single IP address (allocated by the PGW) may comprise several bearers, each one being associated/using a (GTP) tunnel, and identified by a Tunnel Endpoint Identifier (TEID). Moreover, a bearer may comprise data/packets referring to different services such as mail, VOIP or CDN.

To differentiate CDN traffic (i.e. CDN packets) from the rest of the traffic, the S1-TS module is able to learn (i.e. identify, determine) packets parameters inside the UL bearers. These parameters are only learnt from the non-CDN traffic, and may be for instance bearers TEIDs used by a given UE.

Indeed, since the S1-TS module is routing CDN packets and S1u interface is "split", information such as bearer TEIDs for DL/UL CDN packets, are mandatory in order to encapsulate CDN packets in the correct tunnels (i.e. bearers).

The "learning" step may be performed as a background task by the S1-TS module, each time after receiving UL/DL non-CDN packets.

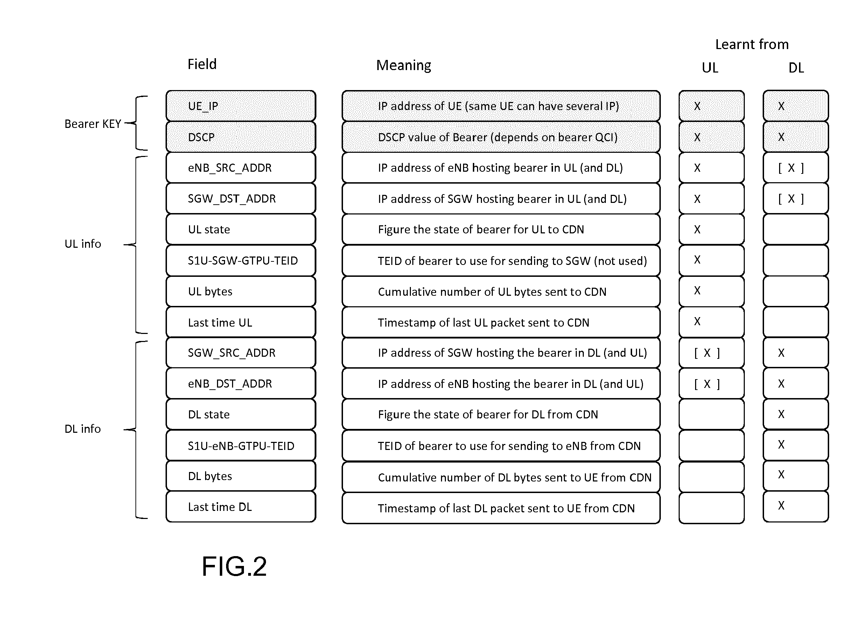

Figure 2, shows a list of parameters inside bearer contexts that the S1-TS module can learn/discover and store from UL or DL non-CDN data traffic (i.e. by observing it).
- The couples (UE_IP, DSCP) are key parameters learnt and used by S1-TS module in DL and UL.

As explained previously, a same session may comprise several bearers, each one using a respective tunnel and identified by a TEID. Since a session between a UE and a network, refers to a single IP, it is not possible to identify a TEID (hence a bearer) based only on the UE IP address. DSCP (Differentiated Services Code Point) field comprises a QCI (Quality of Service Class Identifier) bearer parameter. By observing additionally the DSCP field, it is possible to map a couple (UE_IP, DSCP) with a given TEID. For instance, by observing the non-CDN traffic, the S1-TS module can learn that a given couple (UE_IP, DSCP) uses always the same TEID for a given requested QCI, and further uses this learnt information to route the CDN traffic.
- The GPRS Tunneling Protocol User Plane (GTP-U) TEID (aka GTPU-TEID) of the bearers may be learnt from UL/DL non-CDN packets.

For instance, a TEID of a bearer towards the eNodeB (S1U-eNB-GTPU-TEID), referring to a given couple (UE_IP, DSCP) may be learnt from DL non-CDN traffic, and further used to route DL CDN traffic. Indeed, the S1-TS module is able to identify a mapping (i.e. a link) between a couple (UE_IP, DSCP) and a TEID, learnt from the same bearer. It is to be noted that the TEID of a given UL bearer towards SGW (SU-SGW-GTPU-TEID) is learnt for information but not used, since the UL CDN traffic is not supposed to be routed towards the SGW.
- eNodeB/SGW (aka enB/SGW) source/destination (aka SRC/DST) IP addresses may be learnt and used by the S1-TS module, in order to route/forward non-CDN packets during UL/DL transmission, according to the prior art.
- The UL/DL cumulative bytes sent, last data packets timestamps sent and state of the bearer to/from CDN may be used as counters by S1-TS module, in order to check the coherence of DL/UL CDN traffic exchanges, for instance by updating bearer contexts used for routing the CDN traffic.

Moreover, for a better efficiency, the S1-TS module may further comprise a module "M" on S1ap interface (between eNodeB and MME), able to learn bearer information from the LTE control plane. Such module is further represented on figure 1. For instance, the module "M" can observe the signaling messages between the SGW and the MME, in order to directly learn information such as QCI and TEIDs associated to an IP session. This permits to identify more rapidly the TEIDs to be used for routing DL CDN traffic.

The UL data traffic (i.e. UL packets) processing performed by the S1-TS module is performed following an UE request for a (CDN or non-CDN) content.

An UE connected to an eNodeB, sends a request (for instance for a CDN content) into a (GTP) tunnel that is defined into the LTE network.

Each UL packet referring to a request is received through an input port, by S1-TS module at the S1u interface towards the eNodeB, the module being between the eNodeB and the SGW.

The S1-TS module checks the IP destination address of the request, i.e. of the UL packet. More precisely, the S1-TS module verifies if the IP destination address for the requested content, matches an IP address of a known generic DA, i.e. if the packet is referring to CDN content. The known IP generic address may be for instance, in a preconfigured list of generic DAs, stored by the S1-TS module.

If the IP destination address does not match a known generic DA from the S1-TS module, a discovery/learning step is performed by the S1-TS module, in order to learn (i.e. identify, determine) and store the information aforementioned, for instance:
- packet IP source (i.e. IP address of the UE);
- DSCP field (linked to a requested QoS, function of QCI parameter);
- TEID (mapped/linked with the couple UE IP adress and DSCP).

Based on this information, the (non-CDN) UL packet is then routed/forwarded through S1u interface towards the SGW for requesting a global content to the IP destination address, according to the prior art.

If the packet IP destination matches a known generic DA, this means that this packet is requesting CDN content.

In this case, the S1-TS module stores the DSCP field (i.e. the QCI) associated to the UL CDN packet, and then routes the CDN packet in a tunnel (i.e. a bearer) towards a nearest CDN local DA comprising local content, according to the topology of the mobile network. The nearest local DA may be for instance, a single DA interfaced with S1-TS module through CDN interface.

Additionally the S1-TS module may
- store information concerning the bearer context used towards the nearest DA, for instance the UL bearer TEID used when routing a CDN packet;
- update this bearer context, based on information such as UL cumulative bytes, timestamp of last UL CDN packet sent from the S1-TS module to the nearest DA, in order to monitor/check the coherence between UL and DL CDN traffic exchanges.

Following the reception of DL data traffic (in response to the UE content request), DL data traffic processing is performed by the S1- TS module. More particularly, the S1-TS module is in charge of
- learning information from non-CDN traffic;
- encapsulating received CDN packets into correct identified/determined tunnels, based on the learnt information.

CDN traffic (i.e. DL CDN packets) is received by S1-TS module, at CDN interface towards the nearest DA.

A discovery/learning step is still performed as a background task by the S1-TS module, in order to learn (i.e. identify, determine) and store from non-CDN traffic, packets information such as IP destination (i.e. IP address of the UE), DSCP field (linked to a requested QoS) and TEID referring to each couple IP source and DSCP.

Each CDN DL packet arriving towards the S1-TS module uses the same tunnel as the one used in UL between the S1-TS module and the nearest DA. Indeed, each DL CDN packet, comprises UE IP destination, but is not tagged with a DSCP field. This field has been previously stored by the S1-TS module from a corresponding CDN UL packet, requesting the CDN DL packet.

Following the reception of a CDN DL packet, the S1-TS module tries to found/identify if a corresponding couple referring to DL non-CDN traffic (i.e. received from the SGW), with same UE IP address (i.e. DL IP traffic destination) and same DSCP field as the DL CDN packet has been stored during a previous discovery/learning step.

This couple may permit to establish a mapping between the DL CDN packet and an existing bearer TEID, in order to determine which tunnel (i.e. bearer) must be used for routing the DL CDN traffic towards the eNodeB.

If this matching couple is found, its corresponding TEID, determined during a previous learning step, is used for routing the DL CDN packet.

Otherwise, if this couple is not found, this means that the S1-TS module has not yet discovered a corresponding TEID from the non-CDN traffic.

In this case the CDN DL packet is queued by the S1-TS module, in order to wait an identification of a TEID. Hence, as a parallel task, the S1-TS module may have to check if some DL CDN packets bearers are queued and if yes, once a corresponding TEID has been identified dequeue them and route them to the UE IP destination address using the bearer TEIDs.

Additionally the S1-TS module may
- store information concerning the bearer context towards the eNodeB, used to route the DL CDN packet, for instance the DL bearer TEID;
- update this bearer, based on information such as DL cumulative bytes, timestamp of last DL CDN packet sent to UE from CDN, in order to monitor/check the coherence between UL and DL CDN traffic exchanges.

In one embodiment, the S1-TS module may be integrated within eNodeB, permitting the deployments of DAs at lower level of the LTE network than other existing solutions. In this case CDN content provided by local DAs is local to the cell sites of the eNodeB.

Advantageously, the above described embodiments are compatible with any SGW. Indeed, the S1-TS module may be implemented on some S1u interfaces, whereas other S1u interfaces may remain unchanged. This permits easy deployment of the S1-TS module.

Another advantage of the present invention is that the S1-TS module is "below" SGWs and can be interconnected with at least one DA providing CDN local content. In fact, deployment of locals DAs can be linked only to the deployment of the S1-TS module. This permits advantageously, to place delivery appliances at a lower level in LTE networks than other existing solutions and in a much larger number of places. It brings finer granularity and freedom that MNO and CDN operators can leverage on. For instance by integrating S1-TS module in eNodeB, a DA can provide a local content "close" to cell sites.

Advantageously, the described embodiments do not require any specific enhancements into LTE product and are fully compatible with LTE standards. In fact, no changes in 3GPP standards are required.

In the present description, a CDN is interfaced with LTE network. Nevertheless, it is to be noted, that any other 3GPP mobile network, any equivalent mobile network, or any post-mobile network (such as LTE Advanced) may also be considered instead of the LTE network.

For instance, the SGW in LTE network can be in UMTS network, a gateway such as RNC (Radio Network Controller) or a SGSN (Serving GPRS Support Node) between a NodeB and a GGSN (Gateway GPRS Support Node).

Accordingly, the S1-TS module may be more generally any module implemented on an interface between a base station and a gateway in a mobile network such as a cellular network.

## Claims

1. A device for routing data in a mobile network, this device being interfaced between at least one delivery appliance of a content delivery network, a serving gateway and a base station, the serving gateway being connected to a packet data network gateway, said device being configured for
- receiving at least one uplink data from the base station;
- determining IP destination address for each received uplink data;
- routing the received uplink data
○ towards the delivery appliance when the uplink data IP destination address matches an IP address known from the module;
○ towards the serving gateway otherwise.

2. The device of claim 1 , further configured for
- receiving in response to the uplink data at least one downlink data from the serving gateway or at least one downlink data from the delivery appliance;
- determining IP destination address for each received downlink data;
- routing each received downlink data towards the base station.

3. The device of claim 2, further configured to determine information comprising DSCP field and tunnel endpoint identifier from
- the received uplink data routed towards the serving gateway;
- the received downlink data from the serving gateway.

4. The device of claim 3, further configured for identifying a mapping between each tunnel endpoint identifier and each couple IP destination address and DSCP field determined from
- the received uplink data routed towards the serving gateway;
- the received downlink data from the serving gateway.

5. The device of claim 4, further configured for
- identifying a tunnel endpoint identifier for the received downlink data from the delivery appliance;
- routing the received downlink data from the delivery appliance based on the identified tunnel endpoint identifier.

6. The device of claim 5, further configured for identifying a tunnel endpoint identifier for the received downlink data from the delivery appliance by
- identifying a downlink data received from the serving gateway, using a same couple of information IP destination address and DSCP field as the downlink data received from the delivery appliance;
- identifying the tunnel endpoint identifier mapped with the couple of information, referring to the downlink data received from the serving gateway.

7. The device of any of claims 1 to 6, further interfaced between the base station and a mobility management entity and configured for determining from this interface at least one information used by uplink or downlink data, said information comprising tunnel endpoint identifier and quality of service class identifier.

8. A method for routing data in a mobile network, the method comprising the following steps
- a reception step of at least one uplink data through an interface towards a base station;
- a determination step of IP destination address for each received uplink data;
- a routing step of the received uplink data through an interface
○ towards a delivery appliance of a content delivery network, when the uplink data IP destination address matches a known IP address;
○ towards a serving gateway connected to a packet data network gateway otherwise.

9. The method of claim 8, further comprising
- a reception step in response to the uplink data of at least one downlink data through the interface towards the serving gateway or at least one downlink data through the interface towards the delivery appliance;
- a determination step of IP destination address for each received downlink data;
- a routing step of each received downlink data through the interface towards the base station.

10. The method of claim 9, further comprising a determination step of information comprising DSCP field and tunnel endpoint identifier from
- the received uplink data routed towards the serving gateway;
- the received downlink data from the serving gateway.

11. The method of claim 10, further comprising an identification step of a mapping between each tunnel endpoint identifier and each couple IP destination address and DSCP field determined from
- the received uplink data routed towards the serving gateway;
- the received downlink from the serving gateway.

12. The method of claim 11, further comprising
- an identification step of a tunnel endpoint identifier for the received downlink data from the delivery appliance;
- a routing step of the received downlink data from the delivery appliance based on the identified tunnel endpoint identifier.

13. The method of claim 12, wherein the identification step is performed by
- identifying a downlink data received from the serving gateway, using a same couple of information IP destination address and DSCP field as the downlink data received from the delivery appliance;
- identifying the tunnel endpoint identifier mapped with the couple of information, referring to the downlink data received from the serving gateway.

14. The method of any of claims 8 to 13, further comprising a determination step at an interface between the base station and a mobility management entity of at least one information used by uplink or downlink data, said information comprising tunnel endpoint identifier and quality of service class identifier.

15. Computer program implemented on a processing unit of a computer, the program including code sections for performing instructions corresponding to the steps of a method according to any of claims 8-14.
